# FASCICULE DE BREVET EUROPEEN

(11) **EP 1 386 099 B1**
(45) Date de publication et mention de la délivrance du brevet: **22.06.2005**
(21) Numéro de dépôt: 02738220.9
(22) Date de dépôt: 07.05.2002
(51) Int. Cl.: F16J 15/12

(54) **JOINT METALLIQUE A INSERT FIBREUX**
METALLDICHTUNG MIT FASEREINSATZ
METALLIC JOINT WITH FIBROUS INSERT

(30) Priorité: 09.05.2001 FR 0106129
(43) Date de publication de la demande: 04.02.2004
(73) Titulaire: MEILLOR S.A., F-87140 Nantiat (FR)
(72) Inventeur: BRICCARELLO, Fabrizio, I-10141 Torino (IT)
(74) Mandataire: Ripper, Monika Sigrid, Dr.
(86) Numéro de dépôt international: PCT/FR2002/001571
(87) Numéro de publication internationale: WO 2002/090801

(56) Documents cités:
- FR-A- 1 096 457
- GB-A- 1 067 389
- US-A- 5 407 214

## Description

La présente invention se rapporte à un joint métallique à insert fibreux, plus particulièrement destiné aux collecteurs et brides d'échappement fortement sollicités en température. Un tel joint destiné à la culasse d'un moteur est par exemple connu du document GB 1 067 389.

Les joints métalliques sont utilisés au niveau de la liaison de deux conduits pour assurer l'étanchéité, et comprennent en général au moins une tôle métallique munie d'une nervure susceptible de se déformer élastiquement de manière à assurer l'étanchéité, notamment lorsque les pièces en contact se déforment par dilatation.

Lorsqu'ils sont soumis à de fortes contraintes thermiques, engendrant des déformations relativement importantes, par exemple au niveau des collecteurs d'échappement, de tels joints comportent deux tôles munies chacune d'une nervure, disposées au droit l'une de l'autre de manière symétrique.

A froid, les nervures sont écrasées par l'effort de serrage, tandis qu'à chaud, en raison des phénomènes de dilatation, les pièces en contact tendent à s'écarter si bien que les nervures se déforment élastiquement de manière à maintenir continuellement le contact entre les tôles du joint et assurer ainsi l'étanchéité.

Cependant, les fortes et fréquentes variations de température auxquelles est soumis le joint métallique provoquent un phénomène de trempe qui tend à réduire fortement le coefficient d'élasticité du joint. Ainsi, en perdant de leur élasticité, les nervures ne remplissent plus convenablement leur fonction d'étanchéité et sont fragilisées, des fissures apparaissant au niveau de leurs arêtes.

Aussi, la présente invention vise à pallier les inconvénients des joints métalliques de l'art antérieur en proposant un joint métallique de conception simple, susceptible de conserver ses caractéristiques mécaniques dans le temps, notamment son élasticité, lorsqu'il est soumis à de fréquentes et fortes variations de température.

A cet effet, l'invention a pour objet un joint métallique, susceptible d'être utilisé pour assurer l'étanchéité au niveau de la liaison entre deux conduits de deux pièces soumises à de fortes contraintes thermiques, comprenant au moins deux tôles dans lesquelles est ménagée au moins une ouverture, au moins l'une des tôles comportant au moins une nervure entourant l'ouverture et disposée à une certaine distance du bord de ladite ouverture, caractérisé en ce qu'il comprend un insert en matériau composite, disposé entre la nervure et le bord, ledit matériau résistant aux contraintes thermiques et conservant son élasticité dans le temps.

Avantageusement, l'insert est en matériau composite fibreux.

Selon une autre caractéristique, l'insert peut avoir des caractéristiques géométriques ou mécaniques variables le long de la circonférence.

Selon un mode de réalisation préféré, les deux tôles du joint comportent chacune une nervure disposée au droit l'une de l'autre de façon symétrique, l'insert étant disposé entre le bord de l'ouverture et les nervures.

De préférence, le bord de l'ouverture comprend un sertissage de manière à emprisonner l'insert entre les deux tôles.

Selon une autre caractéristique, le bord d'une des deux tôles est plié et plaqué contre l'autre tôle et subit une opération de planage de manière à ce que la surface supérieure dudit bord soit disposée sensiblement au même niveau de la surface supérieure de la tôle qu'il recouvre partiellement, cette dernière formant un décrochement susceptible de loger ledit bord.

D'autres caractéristiques et avantages ressortiront de la description qui va suivre, description donnée à titre d'exemple uniquement et en regard des dessins annexés sur lesquels :
- la figure 1 est une vue en élévation d'un joint métallique selon l'invention,
- la figure 2A est une vue en coupe d'un premier agencement,
- la figure 2B est une vue en coupe d'un deuxième agencement,
- la figure 2C est une vue en coupe d'un troisième agencement,
- la figure 3A est une vue en coupe d'un premier mode de réalisation, et
- la figure 3B est une vue en coupe d'un autre mode de réalisation.

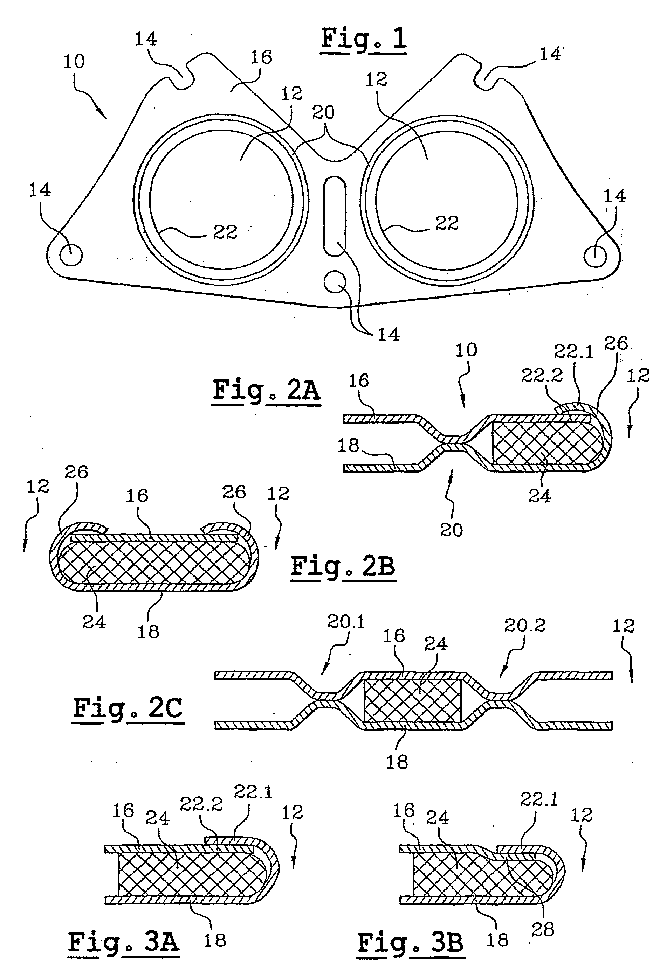

Sur la figure 1, on a représenté en élévation latérale un joint métallique 10, utilisé notamment au niveau d'un collecteur d'échappement, subissant de fortes contraintes thermiques, c'est-à-dire de fortes variations de température et/ou des fréquences élevées de cycles de chauffe.

Comme tous les joints, ce dernier assure l'étanchéité au niveau de la liaison entre deux conduits de deux pièces entre lesquelles il est disposé.

A titre d'exemple, le joint décrit sur la figure 1 comprend deux ouvertures 12 de manière à assurer la continuité des passages entre les pièces disposées de part et d'autre du joint, ainsi que des orifices ou des encoches 14 pour autoriser le passage des éléments de liaison desdites pièces, par exemple des vis, ou des goujons.

La description qui va suivre de l'agencement particulier de l'invention va être faite au regard d'une seule ouverture, ce dernier pouvant être dupliqué ou non aux autres ouvertures ou orifices.

Selon l'invention, le joint 10 comprend au moins deux tôles métalliques 16, 18 dont une au moins comporte une nervure 20 entourant l'ouverture 12 et disposée à une certaine distance du bord 22 de ladite ouverture.

Le matériau de la tôle comportant la nervure est tel qu'il confère à cette dernière une certaine élasticité lui permettant de se déformer de manière à garantir l'étanchéité de la liaison même lors de déformations importantes par dilatation des pièces disposées de part et d'autre du joint.

Selon l'invention, pour protéger la nervure des échauffements, pour que cette dernière conserve au cours du temps toute son élasticité, on dispose entre la nervure 20 et le bord 22 un insert 24 en matériau composite, dans ce cas en forme d'anneau, le matériau conservant son élasticité dans le temps malgré les contraintes thermiques. De préférence, l'insert 24 est en matériau composite fibreux. Plus particulièrement, les fils sont de nature minérale et spécifiquement contiennent des céramiques réfractaires.

Selon une caractéristique perfectionnée, le matériau composite est choisi parmi ceux qui ont tendance à se dilater aux températures de fonctionnement de manière à améliorer l'étanchéité.

Ainsi, l'insert 24 permet de compenser les faibles débattements en conservant son élasticité dans le temps et de protéger la ou les nervures 20 des échauffements de manière à ce que ces dernières conservent leur élasticité dans le temps et compensent les forts débattements engendrés notamment par les déformations par dilatation.

En fonction de la nature et de la densité du matériau de l'insert, la zone de l'insert peut constituer une butée franche à adaptabilité appropriée aux exigences de serrage et de planéité des pièces disposées de part et d'autre du joint.

Selon une autre caractéristique, l'insert 24 peut avoir des caractéristiques géométriques ou mécaniques variables le long de la circonférence, de manière à ajuster de façon optimale ces dernières aux conditions de fonctionnement, notamment aux efforts de serrage qui sont non uniformes sur la surface du joint.

Comme illustré sur les différentes figures, pour améliorer l'étanchéité et compenser les forts débattements, les deux tôles du joint 10 comportent chacune une nervure 20 disposée au droit l'une de l'autre de façon symétrique, l'insert 24 étant disposé entre le bord 22 de l'ouverture 12 et les nervures 20.

Selon une autre caractéristique illustrée par les figures 2A, 2B, 3A et 3B, le bord 22 de l'ouverture comprend un sertissage 26 de manière à emprisonner l'insert 24 entre les deux tôles 16, 18, le bord 22.1 de la tôle 18 étant plié de manière à recouvrir le bord 22.2 de la tôle 16.

Selon un premier mode de réalisation illustré par la figure 3A, le bord 22.1 de la tôle 18 est seulement plaqué contre la tôle 16, et forme un décrochement.

Selon un autre mode de réalisation illustré par la figure 3B, le bord 22.1 de la tôle 18 est plaqué contre la tôle 16 et subit une opération de planage de manière à ce que la surface supérieure dudit bord 22.1 soit disposée sensiblement au même niveau que la surface supérieure de la tôle 16, cette dernière formant un décrochement 28 susceptible de loger le bord 22.1.

Dans ce cas, on note que l'insert 24 est densifié dans la zone de recouvrement des deux tôles, ce qui se traduit par une pré-densification de cette partie de l'insert améliorant l'étanchéité, si bien qu'il n'est plus nécessaire de resserrer les pièces assemblées après un laps de temps.

En complément du sertissage 26, la ou les nervures 20 entourant l'insert 24 réduisent fortement les risques de fluage de ce dernier.

Selon les agencements, l'insert peut se présenter sous forme d'anneaux ou bien d'une plaque dans laquelle sont ménagées une ou plusieurs ouvertures. Sur la figure 2B, l'insert 24 est commun à deux ouvertures 12 et se présente de préférence sous la forme de deux anneaux reliés par un isthme.

Selon un autre agencement illustré par la figure 2C, l'insert 24 est emprisonné entre deux nervures ou deux jeux de nervures concentriques 20.1 et 20.2 si bien que le bord 22 de l'ouverture 12 ne présente plus nécessairement de sertissage. Cette configuration peut être utilisée pour améliorer localement l'étanchéité ou répartir plus favorablement la pression de serrage.

Bien entendu, l'invention n'est évidemment pas limitée au mode de réalisation représenté et décrit ci-dessus, mais en couvre au contraire toutes les variantes, notamment en ce qui concerne le nombre et le matériau des tôles, la présence ou non d'une ou plusieurs nervures sur chaque tôle, l'élasticité et l'épaisseur desdites tôles ainsi que la nature du matériau composite fibreux et son épaisseur, dans la limite de l'étendue des revendications attenantes.

## Revendications

1. Joint métallique, susceptible d'être utilisé pour assurer l'étanchéité au niveau de la liaison entre deux conduits de deux pièces soumises à de fortes contraintes thermiques, comprenant au moins deux tôles (16, 18) dans lesquelles est ménagée au moins une ouverture (12), **caractérisé en ce que** au moins l'une des tôles comporte au moins une nervure (20) entourant l'ouverture (12) et disposée à une certaine distance du bord (22) de ladite ouverture, et **en ce que** ledit joint comprend un insert (24) en matériau composite, disposé entre la nervure (20) et le bord (22), ledit matériau résistant aux contraintes thermiques et conservant son élasticité dans le temps.

2. Joint métallique selon la revendication 1, **caractérisé en ce que** l'insert (24) est en matériau composite fibreux.

3. Joint métallique selon la revendication 2, **caractérisé en ce que** l'insert (24) est en matériau composite fibreux d'origine minérale.

4. Joint métallique selon la revendication 1, 2 ou 3, **caractérisé en ce que** le matériau composite est choisi parmi ceux qui ont tendance à se dilater aux températures de fonctionnement de manière à améliorer l'étanchéité.

5. Joint métallique selon l'une quelconque des revendications 1 à 4, **caractérisé en ce que** l'insert (24) peut avoir des caractéristiques géométriques ou mécaniques variables le long de la circonférence.

6. Joint métallique selon l'une quelconque des revendications 1 à 5, **caractérisé en ce que** les deux tôles (16, 18) formant le joint comportent chacune une nervure (20) disposée au droit l'une de l'autre de façon symétrique, l'insert (24) étant disposé entre le bord (22) de l'ouverture (12) et les nervures (20).

7. Joint métallique selon l'une quelconque des revendications 1 à 6, **caractérisé en ce que** le bord (22) de l'ouverture comprend un sertissage (26) de manière à emprisonner l'insert (24) entre les deux tôles (16, 18).

8. Joint métallique selon la revendication 7, **caractérisé en ce que** le bord (22.1) d'une des deux tôles (18) est plié et juste plaqué contre l'autre tôle (16), et forme un décrochement.

9. Joint métallique selon la revendication 7, **caractérisé en ce que** le bord (22.1) d'une des deux tôles (18) est plié et plaqué contre l'autre tôle (16) et subit une opération de planage de manière à ce que la surface supérieure dudit bord (22.1) soit disposée sensiblement au même niveau de la surface supérieure de la tôle (16) qu'il recouvre partiellement, cette dernière formant un décrochement (28) susceptible de loger ledit bord (22.1).

10. Joint métallique selon l'une quelconque des revendications 1 à 6, **caractérisé en ce que** l'insert (24) est emprisonné entre deux nervures ou deux jeux de nervures concentriques (20.1, 20.2).

## Patentansprüche

1. Metallische Dichtung, die verwendet werden kann, um in Höhe der Verbindung zwischen zwei Rohrleitungen von zwei starken Wärmebelastungen unterworfenen Bauteilen die Dichtheit zu gewährleisten, die mindestens zwei Bleche (16, 18) aufweist, in denen mindestens eine Öffnung (12) ausgebildet ist, **dadurch gekennzeichnet, dass** mindestens eines der Bleche mindestens eine Rippe (20) aufweist, die die Öffnung (12) umgibt und sich in einem gewissen Abstand zum Rand (22) der Öffnung befindet, und dass die Dichtung einen Einsatz (24) aus Verbundmaterial enthält, der zwischen der Rippe (20) und dem Rand (22) angeordnet ist, wobei das Material wärmebelastungsfest ist und seine Elastizität in der Zeit beibehält.

2. Metallische Dichtung nach Anspruch 1, **dadurch gekennzeichnet, dass** der Einsatz (24) aus Faserverbundmaterial ist.

3. Metallische Dichtung nach Anspruch 2, **dadurch gekennzeichnet, dass** der Einsatz (24) aus Faserverbundmaterial mineralischen Ursprungs ist.

4. Metallische Dichtung nach Anspruch 1, 2 oder 3, **dadurch gekennzeichnet, dass** das Verbundmaterial aus denjenigen ausgewählt wird, die die Neigung haben, sich bei den Betriebstemperaturen auszudehnen, um die Dichtheit zu verbessern.

5. Metallische Dichtung nach einem der Ansprüche 1 bis 4, **dadurch gekennzeichnet, dass** der Einsatz (24) entlang des Umfangs variable geometrische oder mechanische Eigenschaften haben kann.

6. Metallische Dichtung nach einem der Ansprüche 1 bis 5, **dadurch gekennzeichnet, dass** die beiden die Dichtung bildenden Bleche (16, 18) je eine Rippe (20) aufweisen, die symmetrisch einander gegenüber angeordnet sind, wobei der Einsatz (24) zwischen dem Rand (22) der Öffnung (12) und den Rippen (20) angeordnet ist.

7. Metallische Dichtung nach einem der Ansprüche 1 bis 6, **dadurch gekennzeichnet, dass** der Rand (22) der Öffnung einen Crimprand (26) aufweist, um den Einsatz (24) zwischen den beiden Blechen (16, 18) einzuschließen.

8. Metallische Dichtung nach Anspruch 7, **dadurch gekennzeichnet, dass** der Rand (22.1) eines der Bleche (18) umgebogen und leicht gegen das andere Blech (16) angelegt ist und einen Rücksprung bildet.

9. Metallische Dichtung nach Anspruch 7, **dadurch gekennzeichnet, dass** der Rand (22.1) eines der beiden Bleche (18) umgebogen und gegen das andere Blech (16) angelegt ist und einem Glättungsvorgang unterzogen wird, damit die Oberfläche des Rands (22.1) sich im Wesentlichen in gleicher Höhe mit der Oberfläche des Blechs (16) befindet, die er teilweise bedeckt, wobei letztere einen Rücksprung (28) bildet, der den Rand (22.1) aufnehmen kann.

10. Metallische Dichtung nach einem der Ansprüche 1 bis 6, **dadurch gekennzeichnet, dass** der Einsatz (24) zwischen zwei Rippen oder zwei Sätzen von konzentrischen Rippen (20.1, 20.2) eingeschlossen ist.

## Claims

1. Metallic gasket capable of being used to create a seal at the join between two pipes of two components subjected to severe thermal stresses, comprising at least two metal sheets (16, 18), in both of which at least one opening (12) is made, **characterized in that** at least one of the sheets has at least one rib (20) surrounding the opening (12) at a certain distance from the edge (22) of the said opening, and **in that** the said gasket comprises an insert (24) of composite material placed between the rib (20) and the edge (22), the said material withstanding the thermal stresses and retaining its elasticity over time.

2. Metallic gasket according to Claim 1, **characterized in that** the insert (24) is a fibrous composite material.

3. Metallic gasket according to Claim 2, **characterized in that** the insert (24) is a fibrous composite material of mineral origin.

4. Metallic seal according to Claim 1, 2 or 3, **characterized in that** the composite material is chosen from materials that have a tendency to expand at the operating temperatures in such a way as to improve the seal.

5. Metallic gasket according to any one of Claims 1 to 4, **characterized in that** the insert (24) may have geometrical or mechanical features that vary around the circumference.

6. Metallic gasket according to any one of Claims 1 to 5, **characterized in that** the two metal sheets (16, 18) forming the gasket each have a rib (20) lying immediately opposite each other and symmetrically, the insert (24) being located between the edge (22) of the opening (12) and the ribs (24).

7. Metallic gasket according to any one of Claims 1 to 6, **characterized in that** the edge (22) of the opening is crimped (26) to trap the insert (24) between the two metal sheets (16, 18).

8. Metallic gasket according to Claim 7, **characterized in that** the edge (22.1) of one (18) of the two metal sheets is folded over and simply pressed onto the other metal sheet (16), and forms a step.

9. Metallic gasket according to Claim 7, **characterized in that** the edge (22.1) of one (18) of the two metal sheets is folded over and pressed onto the other metal sheet (16) and flattened so that the upper surface of the said edge (22.1) lies approximately flush with the upper surface of the metal sheet (16), which it partially covers, the latter sheet forming a step (28) to accommodate the said edge (22.1).

10. Metallic gasket according to any one of Claims 1 to 6, **characterized in that** the insert (24) is trapped between two ribs or two sets of concentric ribs (20.1, 20.2).
